# EUROPÄISCHE PATENTSCHRIFT

(11) **EP 1 055 462 B1**
(45) Veröffentlichungstag und Bekanntmachung des Hinweises auf die Patenterteilung: **01.06.2005**
(21) Anmeldenummer: 00107324.6
(22) Anmeldetag: 04.04.2000
(51) Int. Cl.: B08B 3/02

(54) **Vorrichtung zur Reinigung von Keimhorden**
Device for the cleaning of germination decks
Dispositif pour le nettoyage des germoirs

(30) Priorität: 28.05.1999 DE 19924528
(43) Veröffentlichungstag der Anmeldung: 29.11.2000
(73) Patentinhaber: Bühler AG, 9240 Uzwil (CH)
(72) Erfinder: Bischoff, Wolf-Eckart, 38228 Salzgitter (DE); Faist, Walter, 38159 Vechelde (DE)
(74) Vertreter: Frommhold, Joachim, Dr.

(56) Entgegenhaltungen:
- DE-A- 2 526 323
- DE-U- 7 437 732
- US-A- 4 646 768
- US-A- 5 273 059
- US-A- 5 657 781

## Beschreibung

Die Erfindung betrifft eine Vorrichtung zur Reinigung von Keimhorden, insbesondere zur automatischen Reinigung von Keimhorden in der Mälzerei mit einem Reinigungswagen.

Das Beladen von Hordendarren in Mälzereien oder das Auftragen von körnigem Schüttgut auf Keim- oder Darrhorden ist z.B. aus den DE-C-2801715 oder DE-OS 2654758 bekannt. Nach der CS-PS 97231 ist hierbei auch das Aufstreichen von Grünmalz auf die Horden einer Malzdarre mittels teleskopartig angeordneter, drehbarer Ausschüttröhren bekannt. Letztere sind jedoch im Deckenbereich fest angeordnet und können nur einen Teil der Horde überstreichen.

Ebenfalls bekannt sind Vorrichtungen zum Räumen von Keimkästen gemäss der DE-OS 1417572, welche einen längs des Keimkastens verfahrbaren Wagens zum chargenweisen Abräumen von Keimgut aufweisen. Arbeitsspiele zwischen Räumfahrt und Leerfahrt sollen durch ein Zeitschaltwerk gleichgehalten werden.

Bei einer weiteren Vorrichtung zum Ausräumen von Keimkästen nach der DE-OS 1442114 soll die Vorschubbewegung eines Wenderwagens ausgenutzt werden, wobei die als Wendeschnecken ausgebildeten Wenderelemente unter Drehung in das Keimgut hineinfahren und mit stillstehenden Wendeschnecken nach einer am Rand des Keimkastens angebrachten Fördereinrichtung hin unter Mitnahme von Keimgut zurückfahren. Dabei sollen keine Reste von Keimgut am Boden des Keimkastens verbleiben. Die Wendeschnecken weisen hierzu an ihrem unteren Ende Mitnehmer auf. Bekannt sind auch hydraulisch heb- und senkbare Wenderwagen mit Dreiecksbecherwerken.

Eine Reinigung von Keimhorden erfolgt entweder manuell mit Hochdruckspritzen, Wasserschlauch oder dergleichen oder bereits mit Reinigungswagen, die ringförmig oder linear verfahrbar sind.

Zumeist sind mehrere Reinigungswagen erforderlich, Wasser- und Energiezufuhr erfolgen dabei über längere Wege. Der Montage- und Wartungsaufwand derartiger Reinigungswagen ist hoch.

Bekannt ist eine fahrbare Tankreinigungsanlage gemäss DE-A-33 05 260, die auf dem Chassis eines Sattelschleppers angeordnet ist, auf dem Behälter für Reinigungsflüssigkeiten, verschmutzte Flüssigkeiten usw. und ein Kranausleger angeordnet sind. Die Sprühaggregate werden mittels des längenveränderbaren und/oder knickbaren Kranauslegers in das Innere eines zu reinigenden Kesselwagen befördert. Das Sprühaggregat ist dabei am Ende des Kranauslegers angeordnet.

Ein derartiges Fahrzeug ist jedoch für die Anwendung im Mälzereibetrieb aufgrund der Grösse und eingeschränkten Wirkrichtung des Reinigungsorgans ungeeignet. Analog trifft dies auch für eine Maschine zum Reinigen von Papierwalzen, insbesondere der Zwischenräume zwischen den Walzen gemäss US-PS 5657781 zu. Diese Maschine weist ebenfalls ein Reinigungsorgan in Form einer Bürste auf, welches am Ende eines längsveränderlichen Auslegers angeordnet ist. Aufgrund der auszuführenden Reinigungsfunktion ist diese Einrichtung nur äusserst begrenzt anwendbar und allein von daher für die vielfältigen Reinigungsaufgaben in einer Keimhorde ungeeignet.

Nach der Lehre des Deutschen Gebrauchsmuster 74 37 732 ist weiterhin eine Reinigungsvorrichtung zum Reinigen der Belüftungsräume von Keimkästen in Mälzerei- und Brauereibetrieben bekannt, welche an horizontalen Trägern befindliche Sprührohre aufweist. Die Träger sind mit entsprechenden Laufeinrichtungen zwischen den Seitenwänden eines Keimkastens angeordnet und können in Längsrichtung verfahren werden. Der obere Träger ist um eine Mittelachse verschwenkbar, so dass insgesamt ein Reinigen der Seitenwände, sowie der Decken und Böden möglich ist. Diese Einrichtung ist im Keimkasten fest angeordnet, was auch zur Folge hat, dass die Laufschienen und Spanneinrichtungen für die Träger nur mit hohem Aufwand gereinigt werden können und die Einrichtung selbst nur eine geringe Flexibilität aufweist. Eine Anpassung an veränderliche Raumgeometrien ist nur sehr bedingt gegeben. Eine weitere Reinigungsvorrichtung ist aus US-A-5273059 bekannt.

Die Aufgabe der Erfindung besteht nun darin, die Nachteile des Standes der Technik zu vermeiden und die Betriebsweise von Reinigungswagen sowie deren Anzahl pro Horde zu verringern.

Diese Aufgabe wird an Hand des Kennzeichens des Anspruchs gelöst. Vorteilhafte Ausgestaltungen ergeben sich aus den Unteransprüchen.

Der erfindungsgemäss teleskopierbare Reinigungswagen ermöglicht es, je Horde nur lediglich einen Reinigungswagen zu benötigen. Der Aufwand für die Medienzufuhr (Wasser, Energie) sinkt und Reinigungseffekt und Flexibilität werden deutlich erhöht. In Ruhestellung (eingefahrene Stellung) ist zudem der Platzbedarf sehr gering. Gering ist ebenfalls der Steuerungsaufwand und ein Einsatz ist für eckige und runde Horden gegeben.

Die Erfindung wird nachfolgend in einem Ausführungsbeispiel an Hand einer Zeichnung näher beschrieben. In der Zeichnung zeigen die
- Fig. 1:: eine Keimhorde im Schnitt (Ausfahrzustand),

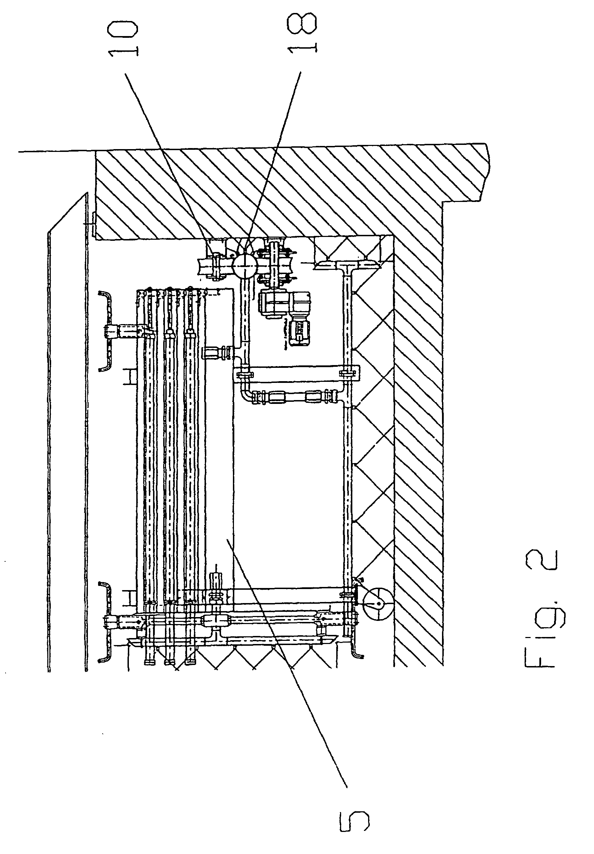

- Fig. 2:: eine Detaildarstellung aus Figur 1 (im Einfahrzustand).

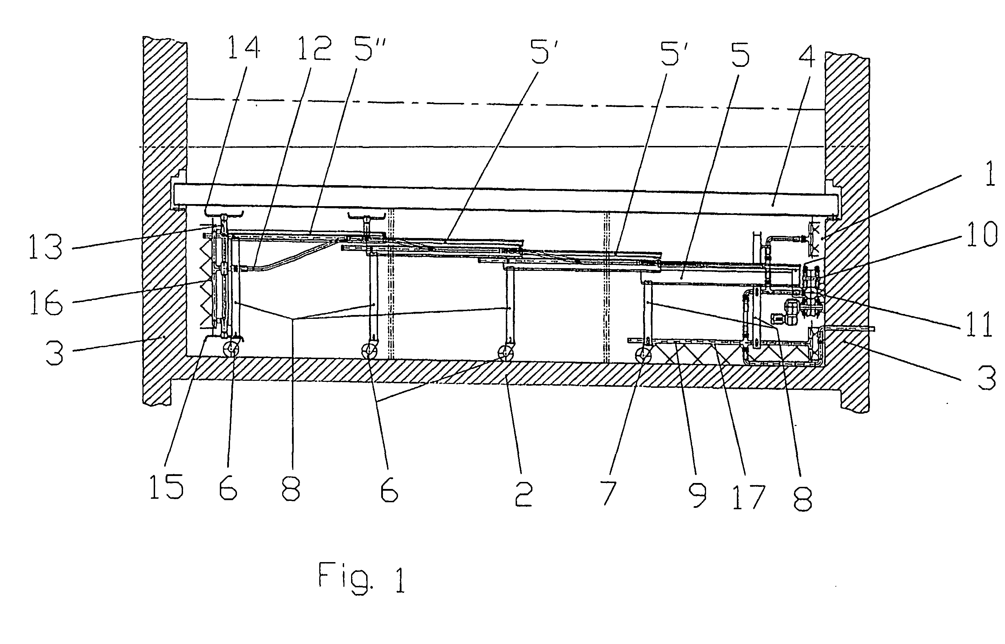

Eine Keimhorde 1 weist einen Boden 2 aus Beton sowie Seitenwände 3 und einen verschiebbaren Lochblech-Hordenboden 4 auf. Um den Hordenboden 4, die Seitenwände 3 sowie den Boden 2 zu reinigen (die Oberfläche bzw. Schütthöhe des Keimgutes ist in Figur 1 beispielhaft strichliert angegeben) auszuräumen, ist eine teleskopierbare Vorrichtung zwischen zwei Seitenwänden 3 angeordnet. Diese Vorrichtung weist mehrere, im Ausführungsbeispiel vier, Teleskopträgerträger 5, 5', 5'' auf, die mittels Linearführungen und Tragrollen 6, 7 verfahrbar sind. Die Rollen 7 werden, wie auch die Teleskopträger 5 über Stützen 8 an einer Innenführung 10, 11 geführt. Die Innenführung 10, 11 ist an der Seitenwand 3 befestigt und besteht aus einem Führungsprofil 11 und Führungsrollen 10.

Die Teleskopträger 5, 5', 5'' sind durch übliche Linearführungen zum teleskopieren miteinander verbunden. Die Teleskopbewegung erfolgt durch einen Pneumatikzylinder pro Teleskop.

Unterhalb der Innenführung 10, 11 sind die Steuerung sowie Energie- und Wasserversorgung angeordnet. Mittels Versorgungsleitungen 12 gelangen Energie und Wasser von dieser Versorgungseinheit zu einem Reinigungsorgan 13.

Das Reinigungsorgan 13 beinhaltet Düsen 14, 15 zur Decken- und Bodenreinigung sowie eine Düsenleiste 16 zur Reinigung der Seitenwand 3.

Von der Versorgungseinheit wird auch eine weitere Düsenleiste 17 zur Reinigung des Bodens 2 und von Teilen der Seitenwand 3 gespeist. Diese Düsenleiste 17 ist an einer Führungsschiene 9 angeordnet. Weitere Düsen 18 zur Seitenwandreinigung sind vorgesehen.

Das Reinigungsorgan 13 kann auch drehbar angeordnet sein.

Reinigungsmittel ist Wasser, welches je nach Bedarf mit geeigneten Zusatzstoffen versehen ist.

Ein Steuerungsprogramm sorgt für die Ausführung an sich üblicher Reinigungsabläufe und Reinigungszyklen.

### Kurzzeichen

- 1: Keimhorde
- 2: Boden
- 3: Seitenwand
- 4: Lochblech-Hordenboden
- 5: Teleskopträger
- 5': Teleskopträger
- 5": Teleskopträger
- 6: Tragrolle
- 7: Tragrolle
- 8: Stütze
- 9: Führungsschiene
- 10: Führungsrolle
- 11: Führungsprofil
- 12: Versorgungsleitung
- 13: Reinigungsorgan
- 14: Düse
- 15: Düse
- 16: Düsenleiste
- 17: Düsenleiste
- 18: Düse

## Patentansprüche

1. Vorrichtung zur Reinigung von Keimhorden, die einen Verfahrwagen mit einem Träger zur Aufnahme von Versorgungsleitungen für Energie und Wasser sowie Reinigungsorgane aufweisen, wobei die Vorrichtung Teleskopträger (5', 5'') enthält, an denen eine Versorgungsleitung (12) angeordnet ist, wobei am äusseren Teleskopträger (5") ein Reinigungsorgan (13) mit Düsen (14/15) und/oder Düsenleisten (16) zur Wand- und Deckenreinigung angeordnet ist, **dadurch gekennzeichnet, dass** weitere Düsenleisten (17) bzw. Düsen (18) zur Boden- und Wandreinigung beim Teleskopträge (5) angeordnet sind

2. Vorrichtung nach Anspruch 1, **dadurch gekennzeichnet, dass** der Teleskopträger (5) drehbar bzw. schwenkbar und/oder längsverfahrbar an einer Seitenwand (3) der Keimhorde (1) angeordnet ist.

3. Vorrichtung nach einem der Ansprüche 1 oder 2, **dadurch gekennzeichnet, dass** das Reinigungsorgan (13) drehbar angeordnet ist.

## Claims

1. A device for cleaning germinating trays, which has a traveling carriage with a carrier to hold supply lines for energy and water, along with cleaning elements, wherein the device contains telescoping carriers (5', 5") that accommodate a supply line (12), wherein the outer telescoping carrier (5") accommodates a cleaning element (13) with nozzles (14/15) and/or nozzle lips (16) for cleaning the walls and ceiling, **characterized in that** additional nozzle lips (17) or nozzles (18) are arranged next to the telescoping carrier (5) for cleaning the floor and walls.

2. The device according to claim 1, **characterized in that** the telescoping carrier (5) is rotatable or pivotable, and situated on a side wall (3) of the germinating tray (1) so that it can travel lengthwise.

3. The device according to one of claim 1 or 2, **characterized in that** the cleaning element (13) is rotatably mounted.

## Revendications

1. Dispositif de nettoyage de claies à germes, qui présente un chariot de déplacement avec un support pour les conduites d'alimentation en énergie et en eau, ainsi que des organes de nettoyage, le dispositif comprenant des supports télescopiques (5', 5"), sur lesquels est disposée une conduite d'alimentation (12), un organe de nettoyage (13) avec des buses (14/15) et/ou des barrettes à buses (16) étant disposé sur le support télescopique extérieur (5") pour le nettoyage des parois et du fond supérieur, **caractérisé en ce que** d'autres barrettes à buses (17) ou buses (18) sont disposées près du support télescopique (5), pour le nettoyage du fond et des parois.

2. Dispositif selon la revendication 1, **caractérisé en ce que** le support télescopique (5) est disposé de façon rotative ou pivotante et/ou déplaçable en longueur sur une paroi latérale (3) de la claie à germes (1).

3. Dispositif selon l'une quelconque des revendications 1 ou 2, **caractérisé en ce que** l'organe de nettoyage (13) est disposé de façon rotative.
